(19) Europäisches Patentamt
European Patent Office
Office européen des brevets

(11) **EP 1 422 784 A1**

(12) **EUROPEAN PATENT APPLICATION**

(43) Date of publication:
**26.05.2004 Bulletin 2004/22**

(51) Int Cl.[7]: **H01Q 1/12**, H01Q 15/00,
H01Q 15/24, B32B 17/10,
C03C 17/06, B60J 1/02

(21) Application number: **02079429.3**

(22) Date of filing: **22.10.2002**

| | |
|---|---|
| (84) Designated Contracting States:<br>**AT BE BG CH CY CZ DE DK EE ES FI FR GB GR IE IT LI LU MC NL PT SE SK TR**<br>Designated Extension States:<br>**AL LT LV MK RO SI**<br><br>(71) Applicant: **GLAVERBEL**<br>**1170 Bruxelles (BE)** | (72) Inventor: **The designation of the inventor has not yet been filed**<br><br>(74) Representative: **Farmer, Guy et al**<br>**GLAVERBEL,**<br>**Department of Intellectual Property,**<br>**Centre R & D,**<br>**Rue de l'Aurore 2**<br>**6040 Jumet (BE)** |

(54) **Glazing panel with a radiation-reflective coating layer**

(57)    A vehicle is provided with a glazing panel coated with a radiation-reflective coating layer and is adapted to have at least an antenna mounted behind the glazing panel. A window permeable to electromagnetic radiations is incorporated in the coating layer such that its size and design increase the transmission ratio between the antenna inside the vehicle and a base station outside the vehicle.

**Fig. 1**

EP 1 422 784 A1

**Fig. 2a**

**Description**

This invention relates to glazing panels and particularly but not exclusively to a vehicle windscreen having a radiation-reflective coating layer provided with a window permeable to electromagnetic radiations.

Although the invention is described herein with particular reference to car windscreens it will be understood that it has applications to other vehicle glazing panels, for example car rear windows and side windows, or train windows.

Coating layers are well known to modify the optical properties of glass, particularly to reduce the proportion of incident solar energy which is transmitted through the glass whilst allowing passage of sufficient visible light to ensure good visibility. This can reduce overheating of the interior of the vehicle in summer and is commonly achieved by reflection of incident solar radiation in the infra-red portion of the spectrum. Infrared reflecting and other radiation-reflective coating layers may increase the selectivity of the glazing panel i.e. the ratio of the proportion of incident visible radiation transmitted through the glazing to the proportion of incident solar energy transmitted through the glazing. Although the invention is described herein with particular reference to infrared reflecting coatings, it will be understood that it is suitable for any radiation-reflective coating layer.

Sensors, emitters or antennas arranged inside a car may rely on passage of electromagnetic waves through the windscreen. For example, passage of an electromagnetic data signal for automatic payment at the toll gates used on the motorways may pass through the windscreen. However, passage of such electromagnetic signals may be hindered by the presence of a radiation-reflective coating and, consequently, a window in the form of a gap or hole may be provided in a radiation-reflective coating layer specifically to allow the passage of electromagnetic radiations through that portion of the glazing. This principle is applicable to allowing passage of any electromagnetic wave through a glazing panel, for example, between an antenna inside the vehicle and a base station, outside the vehicle, which may be, for example, a cellular phone station, a satellite, a television/radio emitter, or a short range communication device, such as a toll connection gate or another vehicle. The term window permeable to electromagnetic radiations as used herein refers to a portion of the surface area of a glazing adapted to permit electromagnetic transmission therethrough. Typical electromagnetic wave frequencies are, for example, 88-108 MHz, 540-1650 kHz, 150-280 kHz for radio signals; 890-960 MHz, 1710-1880 MHz, 1900-2170 MHz, for mobile phone communications; 1575.42±10 MHz for GPS; and 5.8 GHz for Dedicated Short Range Communications.

A "transmission ratio" may be evaluated between an antenna and a base station. It quantifies the ratio between the intensity received by the antenna under test (AUT) and the intensity received by the same antenna placed behind a standard uncoated glazing panel, both intensities being evaluated under the same conditions. The standard uncoated glazing panel presents a laminated structure: glass (2.1 mm) / PVB (0.76 mm) / glass (2.1 mm). Therefore the transmission ratio equals 0 dB if the AUT consists of the same antenna placed behind the standard uncoated glazing panel. If the transmission ratio is evaluated in air, i.e. without any obstacle, it will be positive, because the signal is neither reflected nor absorbed by this standard glazing panel. However, if the AUT includes the antenna placed behind an equivalent glazing panel, but comprising a full coating (i.e. without window permeable to electromagnetic radiations), the transmission ratio will reach a strong negative level due to the reflection and absorption properties of the coated glazing.

The transmission ratio is generally evaluated at 0°, i.e. in a direction normal to the plane of the AUT and the plane of the base station antenna. For some applications, the transmission ratio may be evaluated at +35° or -35°, i. e. in directions forming an angle of 35° on both sides of direction 0°, when the AUT is rotated in its azimuthal plane under a constant elevation.

The purpose of providing a coated glazing panel with a window permeable to electromagnetic radiations has always been to reduce the decrease of the transmission ratio of the signal going through the glazing panel, due to the radiation-reflective coating layer. However, we have surprisingly found that it is possible not only to reduce the decrease of the transmission ratio but also to improve the transmission ratio, compared to the transmission through a windscreen without a coating layer and even, in some cases, to improve it compared to the transmission ratio in air.

According to one aspect, the present invention provides a glazing panel as defined in claim 1. The increase of the transmission ratio as expressed in claim 1 is evaluated by comparison with an uncoated glazing panel presenting an equivalent structure, i.e., for example, same thickness of glass, same PVB thickness if the panel is laminated.

This may be used to allow electromagnetic radiations to pass through a coated glazing panel without decreasing the intensity of the radiated signal.

In the particular case of a 5.8 GHz circularly polarised wave communication between a base station and an antenna inside a vehicle, for example at an electronic toll gate, the transmission ratio at 0° between the base station and the antenna inside the vehicle may be improved by at least 2 dB, and preferably by at least 5 dB, and the transmission ratio at ±35° may stay at the same level or may be improved, compared to the transmission ratios through a glazing panel without a coating layer.

The radiation-reflective coating layer may be a sputtered deposited coating, for example having the general structure antireflective dielectric layer / optional barrier layer / silver containing conductive layer / optional barrier layer / antireflective dielectric layer / optional barrier / silver containing conductive layer / optional barrier layer / antireflective dielectric layer. Such coatings are used in automotive glazings to increase the selectivity of the glazing (i.e. the ratio of the proportion of visible light transmitted to the proportion of incident solar energy transmitted) to reduce the solar heating or greenhouse effect in the vehicle. Alternatively, the coating layer may have a single silver containing layer of the general structure antireflective dielectric layer / optional barrier layer / silver containing conductive layer / optional barrier layer / antireflective dielectric layer. A further possibility is for the coating layer to comprise a pyrolytically deposited layer based, for example on doped tin oxide.

The radiation-reflective coating layer may be sandwiched between two sheets of glass or it may be an exposed coating layer, for example on a monolithic glazing panel. The coating layer may be deposited directly on a surface of the glazing or it may be carried on a film, for example a film of PET incorporated in the glazing.

The antenna inside the vehicle is preferably positioned at a distance of at most $\frac{2D^2}{\lambda}$ from the glazing panel, where D is the largest dimension of the inside antenna and $\lambda$ the wavelength of the transmitted electromagnetic wave between the base station and the inside antenna, or the wavelength at which the antenna is adapted to work. In this particular configuration, the glazing panel may act under the physics law of the near-field zone of antennas, and the transmission ratio may be increased.

Several configurations, shapes, designs and sizes of windows permeable to electromagnetic radiations may be suitable according to the present invention.

Preferably, the window permeable to electromagnetic radiations is a portion of the windscreen that does not have the radiation-reflective coating layer or is a portion of the windscreen wherein the coating layer is absent from a pattern of dots. These dots form uncoated apertures in the coating layer. The window permeable to electromagnetic radiations may be entirely surrounded by the coating layer or may be bounded to the edge of the glazing panel where no coating layer is present and thus be partially surrounded by the radiation-reflective coating layer.

The glazing panel may comprise several windows permeable to electromagnetic radiations. This allows several antennas, sensors or emitters to be placed behind the glazing panel, inside the vehicle. Furthermore, windscreens may be provided with at least two windows positioned symmetrically on both sides of an axis $Y_0$ which divides the glazing panel along its largest dimension in two equal parts, so as to be mounted indifferently on cars fitted for left-hand drive or right-hand drive.

The window permeable to electromagnetic radiations may have a size and shape such that at least a square of $1.064\lambda \times 1.064\lambda$ may be inscribed in it, or preferably, at least a square of $5.5 \times 5.5$ cm$^2$ may be inscribed in it. $\lambda$ is the wavelength of the transmitted electromagnetic wave between the base station and the inside antenna.

Alternatively, the window permeable to electromagnetic radiations may be a substantially circular zone having an area of at least $0.735\lambda^2$, or preferably, at least 19.5 cm$^2$. It may be a disk with a diameter of at least $1.354\lambda$, or preferably, a disk with a diameter of at least 7 cm.

Where the window permeable to electromagnetic radiations is a portion of the windscreen wherein the coating layer is absent from a pattern of dots, the dots may be arranged linearly or in alternate rows. Preferably, the dots have substantially the same size. Such a pattern may be particularly favourable to the increase of the transmission ratio through the window. Indeed, it has been found that the pattern of dots may increase the directivity of the transmission by focusing the signal, and may also increase the efficiency of the transmission by improving the polarisation, the latter being particularly true when considering circularly polarised waves.

Advantageously the dots without coating layer have each a diameter of at least $0.116\lambda$. Preferably, the dots without coating layer have each a diameter of at least 5 mm, or between 5 and 7 mm, or still preferably, 6 mm.

The window permeable to electromagnetic radiations may comprise at least 50 dots with no coating layer, and preferably at least 64 dots with no coating layer. This may optimise the increase in the transmission ratio, so that the transmission ratio may even be higher than the transmission ratio in air, i.e. without glazing panel to pass through. With 64 dots, a maximum transmission ratio may be reached and there may be no further improvement if further dots are added.

Many radiation-reflective coating layers have the intrinsic property of being electrically heatable. The vehicle glazing panel according to the present invention may indeed be heated to be de-misted or de-iced. It is desired that the heating of the glazing panel be as uniform as possible, avoiding hot spots which may damage the coating layer, and avoiding low temperature zones where a de-icing or de-misting function may be delayed. The preferred particular pattern of dots without coating layer in the window permeable to electromagnetic radiations allow the glazing panel to be heated substantially uniformly, but other shapes and designs of windows are also suitable to obtain a homogeneous heating pattern.

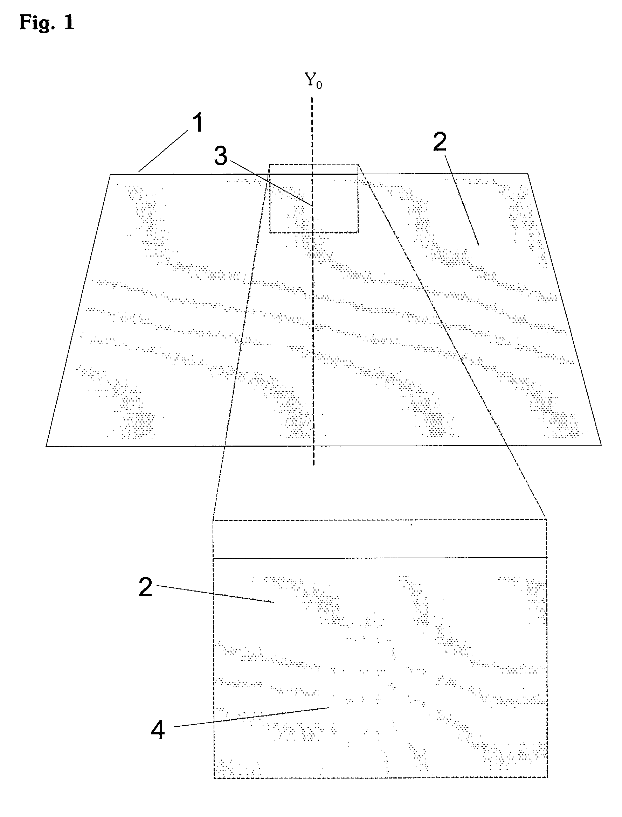

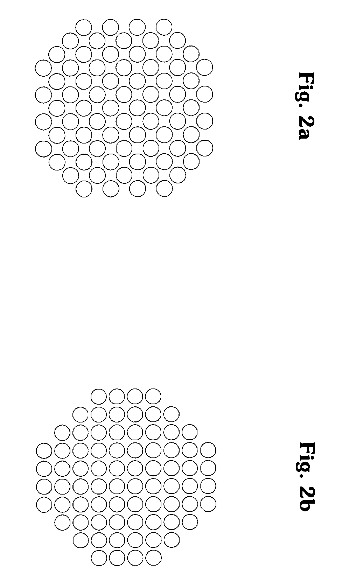

Embodiments of the invention will now be described, by way of examples only, with reference to figures 1 and 2. Figure 1 shows a car windscreen and an enlargement of a portion around the window permeable to electromagnetic radiations. Figure 2 shows other suitable patterns for the window permeable to electromagnetic radiations.

Several transmission ratios have been measured and compared to the transmission ratio through a glazing panel without a coating layer, which served as the reference and to which we gave a value of 0 dB. Results are given in the table below. The electromagnetic waves analysed in this example were all dedicated short range communications at 5.8 GHz as can be found at electronic toll gates on motorways. These are circularly polarised waves. The distance between the antenna inside the vehicle and the glazing panel was in all cases 18 mm, and the largest dimension of the antenna inside the vehicle was approximately 30 mm.

When analysing transmissions at 0°, it shows that when the signal passes through a coated glazing with a window permeable to electromagnetic radiations which is a disk of 50 mm diameter without coating layer or a rectangle of 120 x 70 mm$^2$ without coating layer, the transmission ratio is increased by 2 dB, compared to a signal passing through a glazing without coating layer. Similarly, the transmission is increased by 5 dB, when the signal does not pass through a glazing panel, i.e. in the air. Finally, the transmission ratio is increased by 7 dB when the signal passes through a window permeable to electromagnetic radiations which is a square of 6 x 6 cm$^2$ comprising 64 dots without coating layer of 6 mm diameter each. In this particular embodiment, the transmission ratio is thus better than in the air. As counterexample, the transmission ratio is decreased by 6 dB when the signal passes through a window permeable to electromagnetic radiations which is a square of 6 x 6 cm$^2$ comprising 64 crosses without coating layer of 6 mm long and 1 mm broad. The case of a windscreen with a coating layer which does not comprise a window permeable to electromagnetic radiations is also mentioned in the table: the transmission ratio is in that case decreased by 20 to 40 dB, compared to a windscreen without coating layer.

When analysing transmissions at ±35°, the reference selected is also a glazing panel without coating layer. When the signal passes through a window permeable to electromagnetic radiations which is a square of 6 x 6 cm$^2$ comprising 64 dots without coating layer of 6 mm diameter each, the transmission ratio is at the same level than the reference: it is neither decreased nor increased. Like in the transmission at 0°, the transmission at ±35° is increased by 5 dB, when the signal does not pass through a glazing panel, i.e. in the air. When the signal passes through a coated glazing with a window permeable to electromagnetic radiations which is a rectangle of 120 x 70 mm$^2$ without coating layer, the transmission ratio is increased by 1 dB.

|  | Transmission at 0° | Transmission at ±35° |
|---|---|---|
| Pattern of dots without coating layer | +7 dB | 0 dB |
| No windscreen (air) | +5 dB | +5 dB |
| 120 x 70 mm$^2$ rectangle without coating layer | +2 dB | + 1 dB |
| 50 mm disk without coating layer | +2 dB | |
| **REFERENCE:** **Windscreen without coating layer** | **0 dB** | **0 dB** |
| Pattern of crosses without coating layer | -6 dB | |
| Windscreen with IR reflecting coating layer | -20 to -40 dB | |

Figure 1 shows a car windscreen 1 having a radiation-reflective coating layer 2 and a window permeable to electromagnetic radiations 3. The window permeable to electromagnetic radiations is a square of 6 x 6 cm$^2$ comprising 64 dots without coating layer 4. Each dot has a diameter of 6 mm and is separated from the neighbouring dots by a distance of 1 mm.

Figure 2 shows other suitable patterns for the window permeable to electromagnetic radiations. Figure 2a shows a circular window of 7 cm in diameter comprising 76 dots of 6 mm in diameter, arranged in alternate rows. Figure 2b shows a circular window of 7 cm in diameter comprising 76 dots of 6 mm in diameter, arranged linearly.

**Claims**

1. A vehicle glazing panel comprising a radiation-reflective coating layer and at least a window in the coating layer, permeable to electromagnetic radiations, adapted to have at least an inside antenna mounted behind it, **characterised in that** the size and design of the window permeable to electromagnetic radiations increase the transmission ratio at 0° between said inside antenna and a base station outside the vehicle.

2. A vehicle glazing panel in accordance with claim 1, **characterised in that**, when considering a circularly polarised electromagnetic wave of 5.8 GHz, the size and design of the window permeable to electromagnetic radiations increase the transmission ratio at 0° between the inside antenna and the base station by at least 2 dB.

**3.** A vehicle glazing panel in accordance with claim 2, **characterised in that** the size and design of the window permeable to electromagnetic radiations increase the transmission ratio at 0° by at least 5 dB.

**4.** A vehicle glazing panel in accordance with claim 2 or claim 3, **characterised in that**, when considering a circularly polarised electromagnetic wave of 5.8 GHz, the size and design of the window permeable to electromagnetic radiations do not decrease the transmission ratio at +35° or -35° between the inside antenna and the base station.

**5.** A vehicle glazing panel in accordance with any preceding claim, **characterised in that** the distance between the position at which the inside antenna is adapted to be mounted and the glazing panel is at most $\frac{2D^2}{\lambda}$, where D is the largest dimension of the inside antenna and $\lambda$ the wavelength to which the antenna is devoted.

**6.** A vehicle glazing panel in accordance with any preceding claim, **characterised in that** the window permeable to electromagnetic radiations has a size such that at least a square of 1.064$\lambda$ x 1.064$\lambda$ may be inscribed in it.

**7.** A vehicle glazing panel in accordance with any preceding claim, **characterised in that** the window has a size such that at least a square of 5.5 x 5.5 cm$^2$ may be inscribed in it.

**8.** A vehicle glazing panel in accordance with any of claims 1 to 5, **characterised in that** the window permeable to electromagnetic radiations is a substantially circular zone having an area of at least 0.735$\lambda^2$.

**9.** A vehicle glazing panel in accordance with claim 8, **characterised in that** the window permeable to electromagnetic radiations is a substantially circular zone having an area of at least 19.5 cm$^2$.

**10.** A vehicle glazing panel in accordance with claim 9, **characterised in that** the window permeable to electromagnetic radiations is a disk with a diameter of at least 7 cm.

**11.** A vehicle glazing panel in accordance with any of claims 1 to 10, **characterised in that** the window permeable to electromagnetic radiations is a zone wherein no coating layer is present.

**12.** A vehicle glazing panel in accordance with any of claims 1 to 10, **characterised in that** the window permeable to electromagnetic radiations is a zone wherein the coating layer is absent from a pattern of dots, arranged linearly or in alternate rows.

**13.** A vehicle glazing panel in accordance with claim 12, **characterised in that** the dots without coating layer have each a diameter of at least 0.116$\lambda$.

**14.** A vehicle glazing panel in accordance with claim 12 or claim 13, **characterised in that** the dots without coating layer have each a diameter of at least 5 mm.

**15.** A vehicle glazing panel in accordance with any of claims 12 to 14, **characterised in that** the dots without coating layer have each a diameter between 5 and 7 mm.

**16.** A vehicle glazing panel in accordance with any of claims 12 to 15, **characterised in that** the window permeable to electromagnetic radiations comprises at least 50 dots with no coating layer.

**17.** A vehicle glazing panel in accordance with claim 16, **characterised in that** the window permeable to electromagnetic radiations comprises at least 64 dots with no coating layer.

**18.** A vehicle glazing panel in accordance with any preceding claim, which is electrically heatable.

Fig. 1

**Fig. 2a**

**Fig. 2b**

**European Patent Office**

**EUROPEAN SEARCH REPORT**

Application Number

EP 02 07 9429

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | WO 99 54961 A (IMMERSCHITT STEFAN ;SAINT GOBAIN VITRAGE (FR); MAEUSER HELMUT (NL)) 28 October 1999 (1999-10-28) | 1-11,18 | H01Q1/12 H01Q15/00 H01Q15/24 B32B17/10 C03C17/06 B60J1/02 |
| Y | * page 2, line 10 - page 9, line 12 * * page 10, line 9 - page 13, line 20; figures 1-3 * | 12-17 | |
| X | EP 0 717 459 A (BOSCH GMBH ROBERT) 19 June 1996 (1996-06-19) * column 1, line 26 - line 33 * * column 3, line 10 - line 36; figures 1-3 * | 1-4 | |
| X | WO 01 68395 A (GLAVERBEL ;DEGAND ETIENNE (BE)) 20 September 2001 (2001-09-20) * page 3, line 3 - page 6, line 38; figures 1-5 * | 1-4,18 | |
| X | WO 00 72634 A (GLAVERBEL ;DEGAND ETIENNE (BE); MAZA CHRISTOPHE (FR)) 30 November 2000 (2000-11-30) * page 2, line 1 - page 5, line 9; figures 1,2 * | 1-4,18 | TECHNICAL FIELDS SEARCHED (Int.Cl.7) H01Q B60R B60J B32B C03C |
| X | US 5 620 799 A (SAUER GERD) 15 April 1997 (1997-04-15) * column 2, line 54 - column 3, line 38 * * column 4, line 13 - column 5, line 30; figures 1,2 * | 1,5 | |
| Y | US 5 162 145 A (SCHAEFER WOLFGANG) 10 November 1992 (1992-11-10) * column 2, line 3 - column 3, line 26; figures 1A,1B,2-4 * | 12-17 | |

-/--

The present search report has been drawn up for all claims

| Place of search | Date of completion of the search | Examiner |
|---|---|---|
| THE HAGUE | 19 March 2003 | Angrabeit, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 02 07 9429

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| Y | DE 198 30 791 A (MITSUBISHI ELECTRIC CORP) 16 September 1999 (1999-09-16) * column 2, line 2 - column 8, line 68; figures 3,12 * --- | 12-17 | |
| A | EP 0 726 232 A (SAINT GOBAIN VITRAGE) 14 August 1996 (1996-08-14) * column 1, line 42 - column 4, line 35; figures 1-3 * ----- | 1-18 | |

TECHNICAL FIELDS SEARCHED (Int.Cl.7)

The present search report has been drawn up for all claims

| Place of search | Date of completion of the search | Examiner |
|---|---|---|
| THE HAGUE | 19 March 2003 | Angrabeit, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.**                EP 02 07 9429

This annex lists the patent family members relating to the patent documents cited in the above-mentioned European search report.
The members are as contained in the European Patent Office EDP file on
The European Patent Office is in no way liable for these particulars which are merely given for the purpose of information.

19-03-2003

| Patent document cited in search report | | Publication date | Patent family member(s) | | Publication date |
|---|---|---|---|---|---|
| WO 9954961 | A | 28-10-1999 | DE | 19817712 C1 | 03-02-2000 |
| | | | EP | 0990278 A1 | 05-04-2000 |
| | | | WO | 9954961 A1 | 28-10-1999 |
| | | | JP | 2002506596 T | 26-02-2002 |
| | | | US | 6356236 B1 | 12-03-2002 |
| EP 0717459 | A | 19-06-1996 | DE | 19541743 A1 | 13-06-1996 |
| | | | EP | 0717459 A1 | 19-06-1996 |
| | | | JP | 8242115 A | 17-09-1996 |
| WO 0168395 | A | 20-09-2001 | AU | 6009501 A | 24-09-2001 |
| | | | WO | 0168395 A1 | 20-09-2001 |
| | | | EP | 1274597 A1 | 15-01-2003 |
| WO 0072634 | A | 30-11-2000 | AU | 4919300 A | 12-12-2000 |
| | | | WO | 0072634 A1 | 30-11-2000 |
| | | | EP | 1183913 A1 | 06-03-2002 |
| US 5620799 | A | 15-04-1997 | DE | 4433051 A1 | 21-03-1996 |
| | | | DE | 69525402 D1 | 21-03-2002 |
| | | | DE | 69525402 T2 | 05-09-2002 |
| | | | EP | 0702423 A1 | 20-03-1996 |
| | | | ES | 2172564 T3 | 01-10-2002 |
| | | | JP | 8210042 A | 13-08-1996 |
| US 5162145 | A | 10-11-1992 | FR | 2646667 A1 | 09-11-1990 |
| | | | DE | 4013300 A1 | 24-01-1991 |
| | | | DE | 69013745 D1 | 08-12-1994 |
| | | | DE | 69013745 T2 | 04-05-1995 |
| | | | EP | 0396449 A1 | 07-11-1990 |
| | | | ES | 2064676 T3 | 01-02-1995 |
| | | | JP | 2869138 B2 | 10-03-1999 |
| | | | JP | 3080132 A | 04-04-1991 |
| DE 19830791 | A | 16-09-1999 | JP | 11248835 A | 17-09-1999 |
| | | | DE | 19830791 A1 | 16-09-1999 |
| EP 0726232 | A | 14-08-1996 | DE | 19503892 C1 | 24-10-1996 |
| | | | DE | 69601819 D1 | 29-04-1999 |
| | | | DE | 69601819 T2 | 21-10-1999 |
| | | | EP | 0726232 A2 | 14-08-1996 |
| | | | ES | 2132847 T3 | 16-08-1999 |
| | | | JP | 8250915 A | 27-09-1996 |
| | | | US | 5867129 A | 02-02-1999 |

EPO FORM P0459

For more details about this annex : see Official Journal of the European Patent Office, No. 12/82